## Europäisches Patentamt
## European Patent Office
## Office européen des brevets

(19)

(11) Veröffentlichungsnummer: **0 047 921**
**A1**

(12) # EUROPÄISCHE PATENTANMELDUNG

(21) Anmeldenummer: 81106877.4

(22) Anmeldetag: 03.09.81

(51) Int. Cl.³: **C 02 F 3/20**

(30) Priorität: 15.09.80 DE 3034763
15.09.80 DE 8024659 U

(43) Veröffentlichungstag der Anmeldung:
24.03.82 Patentblatt 82/12

(84) Benannte Vertragsstaaten:
AT BE CH FR GB IT LI SE

(71) Anmelder: Menzel GmbH. + Co.
Hedelfinger Strasse 95
D-7000 Stuttgart 60(DE)

(72) Erfinder: Zink, Jürgen, Verfahrens-Ing. (grad.)
Schilfweg 3
D-7000 Stuttgart 70(DE)

(54) Verfahren zum Belüften einer Flüssigkeit, insbesondere Abwasser und Vorrichtung zur Durchführung des Verfahrens.

(57) Bei diesem Verfahren wird eine Flüssigkeit (3), insbesondere Abwasser, mit einem in der Flüssigkeit (3) befindlichen Belüfteraggregat (11) belüftet, das mindestens einen Belüfterteil (15) aufweist. Die Wandung (17) des Belüfterteils (15) ist gasdurchlässig, so daß das Belüftungsgas an der Außenfläche (25) des Belüfterteils (15) blasenförmig in die Flüssigkeit (3) gelangt.

Zwecks Vermeidung von Verstopfungen am Luftaustritt des Belüfterteils (15) und Erzielung eines intensiven Feinstluftblaseneintrags werden die Flüssigkeit (3) und/oder der Belüfterteil (15) während des Belüftungsvorgangs bewegt. Und zwar derart, daß zwischen der Außenfläche (25) und der angrenzenden Flüssigkeit (3) eine solche Relativgeschwindigkeit erfolgt, daß Feinstluftblasen (24) abgeschert werden.

Menzel GmbH + Co.
Hedelfinger Str. 95
7000 Stuttgart 60

Verfahren zum Belüften einer Flüssigkeit, insbesondere Abwasser,
und Vorrichtung zur Durchführung des Verfahrens

====================================================================

Die Erfindung betrifft ein Verfahren zum Belüften einer Flüssigkeit,
insbesondere Abwasser, und eine Vorrichtung zur Durchführung des Verfahrens, mit einem in der Flüssigkeit befindlichen Belüfteraggregat,
das mindestens eine im wesentlichen rohrförmige Belüfterkerze aufweist, deren Wandung gasdurchlässige Poren besitzt, durch die das
Belüftungsgas an der konvexen Außenfläche der Belüfterkerze blasenförmig in die Flüssigkeit gelangt.

Bei Abwasserbelüftungsanlagen ist es bekannt, Belüftraggregate mit
rohrförmigen Belüfterkerzen einzusetzen, deren Wandung aus keramischen
Werkstoffen oder aus einem Quarzsand-Kunstharzgemisch bestehen und
gasdurchlässige Poren aufweisen. Beim Belüften des Abwassers tritt
die Luft an der konvexen Außenfläche der Belüfterkerze blasenförmig
aus und die Blasen steigen, nachdem sie sich von der Außenfläche
gelöst haben, nach oben in Richtung zur Flüssigkeitsoberfläche auf.
Hierbei wird bemängelt, daß der Lufteintrag in die Flüssigkeit oftmals
nicht effektiv genug ist, da die sich von der Außenfläche abhebenden
Luftblasen vielfach zu groß sind. Die Größe der Luftblasen ist weitgehend abhängig von der Größe der Poren in der Wandung der Belüfterkerze. Wird jedoch eine sehr kleine Porenweite gewählt, so besteht eine große Empfindlichkeit gegen Verstopfungen, so daß die Gefahr unerwünschter Bestriebsstörungen besteht. Aus diesem Grund kann die Porenweite der Belüfterkerzen nicht weiter reduziert werden. Grundsätzlich besteht auch die Möglichkeit, die Luftmenge, die durch die einzelne Belüfterkerze durchgesetzt wird, wesentlich zu reduzieren. Bei einem geringen Luftmengendurchsatz lösen sich die Luftblasen bereits beim Erreichen eines verhältnismäßig kleinen Durchmessers von der Außenfläche der Belüfterkerze ab. Auch hierbei treten jedoch erhebliche Nachteile auf, da beim Unterschreiten einer Mindestluftmenge von etwa 3 m$^3$ je Meter Belüfterkerze und Stunde innerhalb kurzer Zeit Verstopfungserscheinungen an der Belüfterkerze auftreten, so daß auch damit wieder unerwünschte Betriebsstörungen gegeben sind. Zudem wäre es dabei zur Erzielung einer ausreichenden Belüftungsleistung erforderlich, zusätzliche Belüfterkerzen zu installieren.

Demgemäß besteht die Aufgabe der Erfindung darin, ein Verfahren der eingangs beschriebenen Art so zu verbessern, daß mit einfachen Mitteln unter Einsparung zusätzlicher Belüfterkerzen eine höhere Wirtschaftlichkeit bei der Belüftung des Abwassers mit intensiver Feinstblasenluftzufuhr erzielt und ein verstopfungsfreier Luftaustritt aus der Belüfterkerze erreicht wird.

Diese Aufgabe wird erfindungsgemäß dadurch gelöst, daß während des Belüftens die Flüssigkeit und/oder die Belüfterkerze in Richtung quer zu deren Längsachse bewegt werden, wobei eine luftblasenabscherende Relativgeschwindigkeit zwischen der konvexen Außenfläche und

- 3 -

der angrenzenden Flüssigkeit erfolgt.

Bevorzugte Ausgestaltungen und Weiterbildungen der Erfindung sind durch die Merkmale der Unteransprüche gekennzeichnet, wobei zur Durchführung des erfindungsgemäßen Verfahrens insbesondere ein Belüfteraggregat geeignet ist, das eine im wesentlichen vertikale Hohlwelle und von dieser radial abstrebende Belüfterkerzen aufweist.

Mit der Erfindung wird der Vorteil erreicht, daß die aus der Belüfterkerze austretenden Luftblasen durch die Relativgeschwindigkeit zwischen der konvexen Außenfläche der Belüfterkerze und der zu begasenden, angrenzenden Flüssigkeit von der Außenfläche wesentlich vor dem Erreichen ihrer spezifischen Blasengröße abgeschert werden. Es hat sich gezeigt, daß dabei die Luftblasengröße, die bei der bisher üblichen Feinblasenbelüftung bei ca. 3 mm Durchmesser liegt, so verkleinert wird, daß von der Belüfterkerze ein Schwarm von ausgesprochenen Feinstluftblasen geringsten Durchmessers in die Flüssigkeit eingeht. Diese Feinstluftblasen bewegen sich mit sehr niedriger Aufstiegsgeschwindigkeit in Richtung zur Flüssigkeitsoberfläche, so daß lange Verweilzeiten in der Flüssigkeit gegeben sind. Die schwarmartigen Feinstblasen weisen zudem insgesamt eine erheblich größere spezifische Oberfläche auf als die bisher üblichen Belüftungsblasen, so daß damit eine erhebliche Steigerung der Belüftungsintensität und Abwasserbehandlung erzielt wird. Durch die Feinstblasenbelüftung wird eine bedeutend größere Wirtschaftlichkeit bei der Abwasserbehandlung erzielt und es ist zudem eine Steigerung der Umweltfreundlichkeit gegeben, da die Feinstluftblasen nur langsam aufsteigen und somit nicht an der Flüssigkeitsoberfläche aufspritzen, so daß

- 4 -

- 4 -

ein etwaiger Bakterienaustritt aus der zu behandelnden Abwasserflüssigkeit an die Umluft auf ein Minimum reduziert ist. Darüber hinaus ist beim Winterbetrieb eine hohe Betriebssicherheit gegeben, da durch das Nichtaufspritzen des Abwassers auch keine naheliegenden Funktionsteile vereisen können. Außerdem wird eine Auskühlung des Abwassers, die bei Luftblasenaufspritzern an der Flüssigkeitsoberfläche verhältnismäßig groß ist, weitgehend vermieden, was sich ebenfalls günstig auf die Abwasserbehandlung auswirkt.

Bei dem erfindungsgemäßen Verfahren kann es günstig sein, die Belüfterkerzen stationär im Abwasserbecken zu installieren und eine vorzugsweise horizontale Wasserströmung mit verhältnismäßig hoher Geschwindigkeit, die mit mindestens 50 cm/sec. an der konvexen Außenfläche der Belüfterkerzen vorbeistreicht, zu erzeugen. Die Erzeugung einer solchen Flüssigkeitsströmung kann beispielsweise durch einen Propeller, ein Paddel od. dgl. erfolgen, wobei die partielle Geschwindigkeit an der Belüfterkerze dadurch erhöht werden kann, daß düsenartige Strömungseinbauten vor den Belüfterkerzen vorgesehen werden, die eine geschwindigkeitssteigernde Düsenwirkung erzeugen.

Eine weitere Möglichkeit zur Erzeugung einer Scherwirkung besteht darin, daß die Belüfterkerzen vorzugsweise im Gegenstrom zur Wasserströmung bewegt werden. Auch hier kann durch Vorschalten von düsenartigen Strömungseinbauten die partielle Schergeschwindigkeit an der Außenfläche der Belüfterkerzen zusätzlich erhöht werden.

Auch ist zur Erzeugnung einer Feinstblasenabscherwirkung möglich, die Belüfterkerzen im ruhenden oder nur langsam bewegten Abwasser

- 5 -

in Relation zu diesem schnell zu bewegen. Dies kann vorteilhaft dadurch erfolgen, daß die Belüfterkerzen in eine Drehbewegung um ihre horizontale Längsachse und/oder nach Befestigung an einer entsprechenden Vorrichtung um eine Vertikalachse versetzt werden.

Hierbei ist es günstig, eine vertikale Hohlwelle vorzusehen, die durch einen Getriebemotor angetrieben wird, der vorteilhaft stufenlos regelbar ist. Am unteren Endbereich der Hohlwelle sind dabei die Belüfterkerzen vorzugsweise sternförmig angeordnet. Die Hohlwelle hat hier im unteren Bereich Luftaustrittsöffnungen, so daß über die Hohlwelle von einer vorzugsweise oberhalb der Flüssigkeitsoberfläche angeordneten Lufteintragsvorrichtung Luft in die Belüfterkerzen gedrückt wird. Die an der Außenfläche der Belüfterkerzen austretenden Feinstblasen werden beim erfindungsgemäßen Verfahren bereits in der ersten Phase ihrer Entstehung abgeschert. Diese Feinstluftblasen, die sich in der Flüssigkeit schwarmartig verteilen, steigen ausgesprochen langsam in Richtung zur Flüssigkeitsoberfläche auf.

Um eine größtmögliche Verteilung der Feinstluftblasen über den gesamten Bereich des Abwasserbeckens zu erreichen, kann eine Umwälz- oder Mischvorrichtung beispielsweise durch einen Propeller, ein Paddel oder dgl. vorgesehen werden, wodurch die Flüssigkeit an dem Belüfteraggregat im wesentlichen horizontal vorbeistreicht.

Die Drehvorrichtung für die vertikale Hohlwelle, die vorzugsweise mit einem stufenlos regelbaren Getriebemotor angetrieben wird, kann mit der Lufteintragsvorrichtung so ausgelegt sein, daß bei manueller oder auch automatischer Drehzahlregelung gleichzeitig die jeweils

- 6 -

erforderliche, in die Flüssigkeit einzutragende Luftmenge angepaßt wird. Je höher der Luftdurchsatz, desto höher wird die Drehzahl gewählt, um die günstigste Feinstblasengröße zu erzielen. Die Belüftung kann dabei automatisch über eine Sauerstoffelektrode gesteuert werden, die den in der Flüssigkeit gelösten Sauerstoffanteil mißt.

Um Verstopfungen durch Abwasserverunreinigungen an den Belüfterkerzen zu vermeiden, ist es bisher erforderlich, die Belüftung kontinuierlich zu betreiben, d. h., daß stets eine Luftzufuhr erfolgt. Da jedoch beim Belüften von Flüssigkeiten in vielen Fällen eine intermittierende Belüftung gewünscht bzw. notwendig ist, ist es insbesondere bei der erfindungsgemäßen Abwasserfeinstblasenbelüftung günstig, die Belüftungseinrichtung aus der Flüssigkeit heraushebbar und eintauchbar zu gestalten, was zweckmäßig durch eine Hebe- oder auch Schwenkvorrichtung erzielt werden kann, wobei erfindungsgemäß bei erwünschter Abschaltung der Belüftung zunächst die Belüfterkerzen aus der Flüssigkeit herausgehoben werden und anschließend die Abschaltung der Luftzufuhr erfolgt. Zum erneuten Belüften der Flüssigkeit wird zunächst die Luftzufuhr geöffnet und dann das Belüfteraggregat in die Flüssigkeit eingetaucht. Diese Hebe- bzw. Schwenkvortrichtung kann durch eine Sauerstoffelektrode geregelt werden, wobei bei Erreichen eines bestimmten Sauerstoffgehaltes zunächst die Hebe- bzw. Schwenkvorrichtung in Tätigkeit gesetzt wird und anschließend, sobald sich die Belüfterkerzen oberhalb der Flüssigkeitsoberfläche befinden, die Belüftungsvorrichtung abgeschaltet wird. Sobald die Sauerstoffelektrode einen vorgewählten unteren Grenzwert anzeigt, erfolgt der Einschaltvorgang der Belüftung in umgekehrter Reihenfolge.

- 7 -

- 7 -

Es liegt im Rahmen der Erfindung, anstelle einer Sauerstoffelektrode auch andere Regelungsmechanismen vorzusehen, die beispielsweise zeitabhängig, abhängig vom ph-Wert oder vom Redox-Potential bzw. vom Gehalt eines anderen Gases geregelt werden.

Da zum Zeitpunkt des Herausschwenkens des Belüftungsaggregates praktisch keine oder nur geringe Strömung des Abwassers im Becken erforderlich ist, kann auch das Strömungsaggregat abgestellt oder in seiner Leistung auf einen Minimalwert reduziert werden. Diese Regelung wird vorzugsweise mit der Regelung für die Schwenkvorrichtung des Belüftungsaggregates und der Belüftungssteuerung gekoppelt.

Weiterhin ist es günstig, die radial sternförmig abstrebenden Belüfterkerzen in mindestens zwei Ebenen übereinander an der Hohlwelle des Belüfteraggregates anzuordnen, wobei es zweckmäßig sein kann, die Belüfterkerzen der beiden Ebenen so versetzt anzuordnen, daß die Belüfterkerzen der einen Ebene sich über dem horizontalen Abstandsbereich der Belüfterkerzen der anderen Ebene befinden. Dabei ist es zudem vorteilhaft, entsprechende Druckreduzierungen in den Luftdurchführungsleitungen der tieferliegenden Belüfterkerzen zur Erzielung eines Druckausgleichs vorzusehen, so daß die Belüfterkerzen weitgehend gleichmäßig mit Luft beschickt werden. Dadurch ergibt sich der Vorteil, daß noch größere Luftmengen je Belüfteraggregat eingetragen werden können.

Es liegt selbstverständlich auch im Rahmen der Erfindung, insbesondere bei größeren Abwaserreinigungsanlagen, mehrere Belüfteraggregate

- 8 -

- 8 -

in einem Becken oder in hintereinander geschalteten Becken vorzusehen.

Weitere Vorteile und Einzelheiten der Erfindung sind der nachfolgenden Beschreibung und der Zeichnung zu entnehmen, die in schematischer Darstellung eine bevorzugte Ausführungsform als Beispiel zeigt. Es stellen dar:

Fig. 1  eine Abwasserbehandlungsanlage mit einer erfindungsgemäßen Abscherbelüftung in einer schematischen, teilweise geschnittenen Ansicht und

Fig. 2  eine teilweise geschnittene Draufsicht auf das Belüftungsaggregat der Abwasserbehandlungsanlage der Fig. 1.

Die in der Zeichnung dargestellte Abwasserbehandlungsanlage 1 weist ein Becken 2 auf, das mit zu behandelnder Flüssigkeit 3 gefüllt ist, wobei die Flüssigkeitsoberfläche 4 in geringem Abstand unter dem oberen Beckenrand 5 liegt.

Das Becken 2 weist im Bereich des Beckenrandes 5 einen Träger 6 auf, auf dem eine Hebe-/Senkvorrichtung 7 um eine Achse 8 schwenkbar gelagert ist. Auf der Hebe-/Senkvorrichtung 7 ist ein stufenlos regelbarer Getriebemotor 9 angeordnet, der eine sich vertikal nach unten erstreckende Hohlwelle 10 eines Belüfteraggregats 11 dreht. In der Hohlwelle 10 wird über eine Leitung 12, die an einem Drucklufterzeuger 13 angeschlossen ist und ein Steuerventil 14 aufweist, Luft eingedrückt.

- 9 -

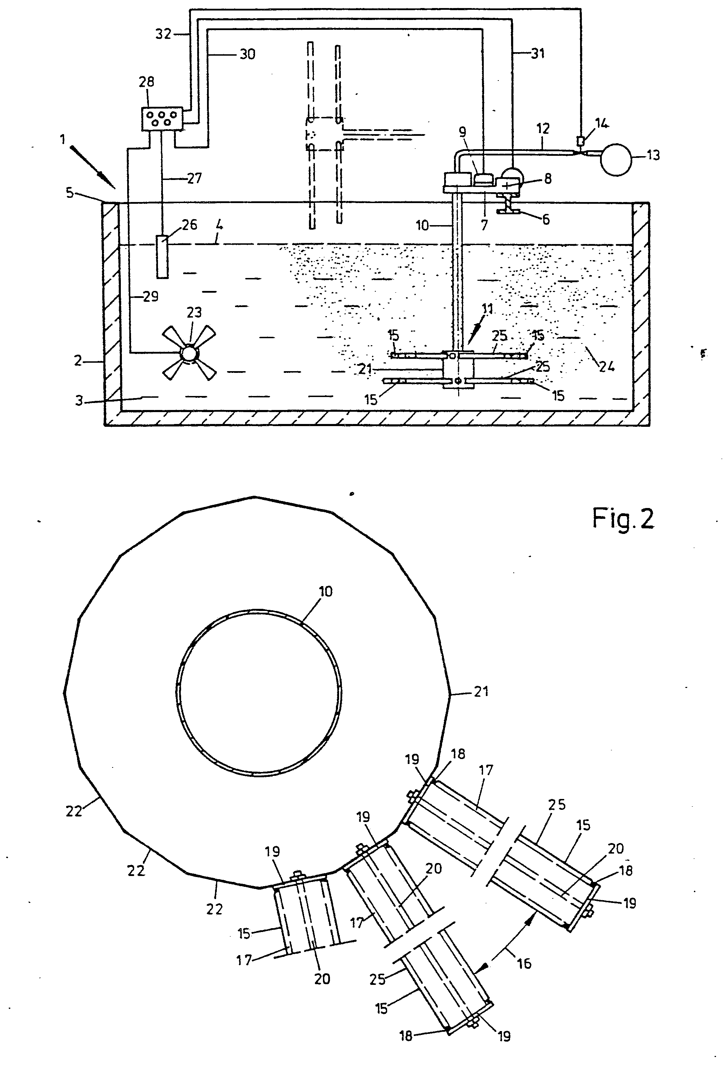

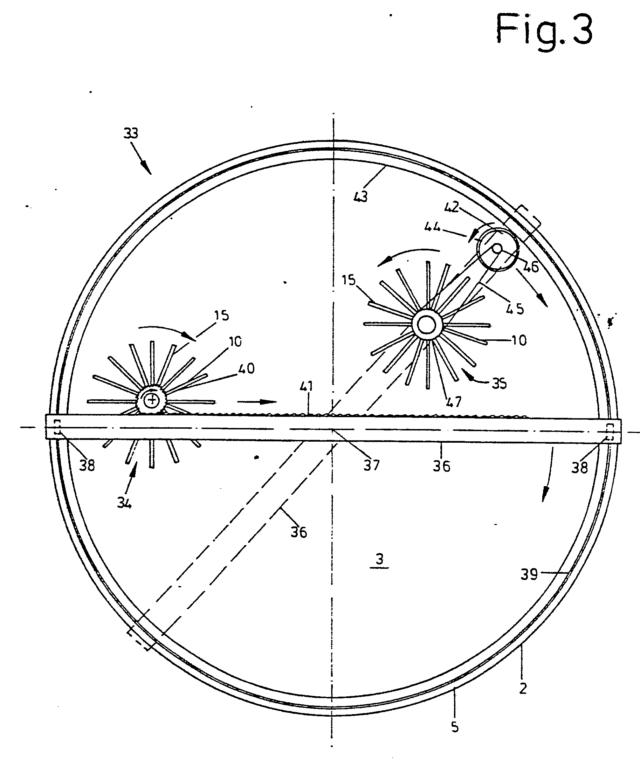

Das Belüfteraggregat 11 weist am unteren Endbereich der Hohlwelle 10 Belüfterkerzen 15 auf, die, wie insbesondere der Fig. 2 zu entnehmen ist, radial von der Hohlwelle 10 abstreben und sternförmig angeordnet sind. Die Belüfterkerzen 15, deren Längsachse quer zur Längsrichtung der Hohlwelle 10 verläuft und somit horizontal liegt, sind übereinander in zwei Ebenen angeordnet. Dabei sind die Belüfterkerzen 15 der beiden Ebenen so zueinander versetzt, daß die Belüfterkerzen 15 der einen Ebene über bzw. unter dem Abstandsbereich 16 der Belüfterkerzen 15 der anderen Ebene liegen. Die Belüfterkerzen 15 sind im wesentlichen rohrförmig ausgebildet und besitzen eine Wandung 17, die aus einem keramischen Werkstoff oder aus einem Quarz-sand-Kunstharzgemisch bestehen kann und kleine gasdurchlässige Poren aufweist. An den Stirnseiten der Belüfterkerzen 15 befinden sich Dichtungsringe 18 und Abschlußdeckel 19, die durch eine Längsschraube 20 verspannt sind. Die Belüfterkerzen 15 sind an einer der Hohlwelle 10 zugeordneten Kastenwandung 21 mittels der Längsschraube 20 befestigt. Die Kastenwandung ist polygonal gestaltet und weist insgesamt sechzehn Segmentteile 22 auf, an denen die Belüfterkerzen 15 anliegen.

Im Becken 2 ist in der Flüssigkeit 3 zudem ein Strömungserzeuger 23 angeordnet, der beim vorliegenden Ausführungsbeispiel als Propeller ausgeführt ist. Durch den Strömungserzeuger 23 wird die Flüssigkeit 3 in einer Horizontalströmung bewegt, die im wesentlichen in der Ebene der Längsachse der Belüfterkerzen 15 verläuft, aber praktisch auch zudem quer gegen die Längsrichtung der Belüfterkerzen 15 wirkt und somit eine Abscherung von Feinstluftblasen 24 an der konvexen Außenfläche 25 der Belüfterkerzen 15 verursacht. Die Abscherwirkung wird dadurch erhöht, daß sich das Belüftungsaggregat 11 um

- 10 -

die Achse der Hohlwelle 10 dreht, so daß die Feinstluftblasen 24 bereits in der Phase ihrer Entstehung von der Außenfläche 25 abgeschert werden und als sich breit verteilender, dichter Schwarm ausgesprochen langsam in Richtung zur Flüssigkeitsoberfläche 4 aufsteigen. Die Abscherwirkung der Feinstluftblasen 24 kann außerdem noch dadurch erhöht werden, daß die Belüfterkerzen 25 um ihre horizontale Längsachse zusätzlich gedreht werden.

In die Flüssigkeit 3 ist außerdem eine Sauerstoffelektrode 26 eingetaucht, die über eine Steuerleitung 27 mit einer Steuereinrichtung 28 verbunden ist. Von der Steuereinrichtung 28 führen weitere Steuerleitungen 29, 30, 31, 32 zum Strömungserzeuger 23, Getriebemotor 9, Hebe-/Senkvorrichtung 7 und Steuerventil 14, so daß eine vollautomatische Regelung der Abwasserbelüftung entsprechend den unterschiedlichsten Anforderungen sowohl kontinuierlich als auch intermittierend möglich ist. Bei einer intermittierenden Belüftung wird das Belüftungsaggregat 11 um die Achse 8 um 90° nach oben in die gestrichelt dargestellte Position geschwenkt. Vor dem Ausschwenken des Belüfteraggregats 11 wird dessen Drehbewegung über die Steuereinrichtung 28 abgeschaltet, während die Luft noch weiterhin aus den Belüfterkerzen 15 ausströmt. Erst nachdem das Belüfteraggregat 11 sich über der Flüssigkeitsoberfläche 4 befindet, erfolgt eine Abschaltung der Luftzuführung mittels des Steuerventils 14. Parallel dazu kann der Strömungserzeuger 23 abgeschaltet bzw. auf eine Minimumleistung reduziert werden. Zur erneuten Belüftung der Flüssigkeit 3, wobei der Impuls über die Sauerstoffelektrode 26 ausgelöst wird, wird zunächst über die Steuereinrichtung 28 das Steuerventil 14 geöffnet, so daß Luft aus den Belüfterkerzen 15 ausströmt. Sodann wird das Belüfter-

- 11 -

- 11 -

aggregat 11 automatisch in die Flüssigkeit 3 eingeschwenkt und es erfolgt anschließend zur Abscherung der austretenden Feinstluftblasen 24 die Einschaltung der Drehbewegung des Belüfteraggregats 11 und/ oder die Einschaltung des Strömungserzeugers 23. Soll die durch den Strömungserzeuger 23 erzeugte Strömung zur Erhöhung der Abschergeschwindigkeit an den Belüfterkerzen 15 weiter gesteigert werden, so besteht auch die Möglichkeit, im Bereich vor dem Belüfteraggregat 11 einen düsenförmigen Strömungsbeschleuniger anzuordnen.

- 12 -

**0047921**

Menzel GmbH + Co.
-edelfinger Str. 95
7000 Stuttgart 60

Patentansprüche

================

1. Verfahren zum Belüften einer Flüssigkeit, insbesondere Abwasser, und Vorrichtung zur Durchführung des Verfahrens, mit einem in der Flüssigkeit befindlichen Belüfteraggregat, das mindestens eine im wesentlichen rohrförmige Belüfterkerze aufweist, deren Wandung gasdurchlässige Poren besitzt, durch die das Belüftungsgas an der konvexen Außenfläche der Belüfterkerze blasenförmig in die Flüssigkeit gelangt, dadurch gekennzeichnet, daß während des Belüftens die Flüssigkeit (3) und/oder die Belüfterkerze (15) in Richtung quer zu deren Längsachse bewegt werden, wobei eine Feinstblase (24) abscherende Relativgeschwindigkeit zwischen der konvexen Außenfläche (25) und der angrenzenden Flüssigkeit (3) erfolgt.

2. Verfahren nach Anspruch 1, dadurch gekennzeichnet, daß bei der Bewegung der Feinstluftblasen (24) mit einem kleinen Durchmesser von weniger als 1 mm von der konvexen Außenfläche (25) der Belüfterkerze (15) durch die Relativgeschwindigkeit abgeschert werden.

3. Verfahren nach einem der vorstehenden Ansprüche, dadurch gekennzeichnet, daß die Relativgeschwindigkeit zwischen der Flüssigkeit (3) und der konvexen Außenfläche (25) der Belüfterkerze (15) mindestens 50 cm/sec. beträgt.

4. Verfahren nach einem der vorstehenden Ansprüche, dadurch gekennzeichnet, daß die Flüssigkeit (3) im wesentlichen in horizontaler Richtung an der Belüfterkerze (15) vorbeiströmt.

5. Verfahren nach einem der vorstehenden Ansprüche, dadurch gekennzeichnet, daß die Strömung der Flüssigkeit (3) vor der Belüfterkerze (15) düsenartig erhöht wird.

6. Verfahren nach einem der vorstehenden Ansprüche, dadurch gekennzeichnet, daß die Belüfterkerze (15) vorzugsweise gegen die Strömung der Flüssigkeit (3) bewegt wird.

7. Verfahren nach einem der vorstehenden Ansprüche, dadurch gekennzeichnet, daß die Bewegungsgeschwindigkeit der Belüfterkerze (15) größer ist als die Bewegungsgeschwindigkeit der Flüssigkeit (3).

8. Verfahren nach einem der vorstehenden Ansprüche, dadurch gekennzeichnet, daß die Belüfterkerze (15) in der Flüssigkeit (3) um eine im wesentlichen vertikale Achse bewegt wird.

9. Verfahren nach einem der vorstehenden Ansprüche, dadurch gekennzeichnet, daß die Belüfterkerze (15) um ihre vorzugsweise horizontal gerichtete Längsachse gedreht wird.

10. Verfahren nach einem der vorstehenden Ansprüche, dadurch gekennzeichnet, daß die Bewegungsgeschwindigkeit der Belüfterkerze
(15) regelbar ist.

11. Verfahren nach einem der vorstehenden Ansprüche, dadurch gekennzeichnet, daß die Belüfterkerze (15) zur intermittierenden Belüftung der Flüssigkeit (3) aus letzterer herausgehoben bzw.
-geschwenkt wird.

12. Verfahren nach einem der vorstehenden Ansprüche, dadurch gekennzeichnet, daß bei intermittierender Belüftung die Luftzufuhr
zur Belüfterkerze (15) nach dem Herausheben aus und vor dem
Eintauchen in die Flüssigkeit (3) abgesperrt wird.

13. Verfahren nach einem der vorstehenden Ansprüche, dadurch gekennzeichnet, daß eine Stillsetzung der bewegten bzw. drehenden Belüfterkerze (15) vor dem Herausheben aus und nach dem Eintauchen
in die Flüssigkeit (3) erfolgt.

14. Verfahren nach einem der vorstehenden Ansprüche, dadurch gekennzeichnet, daß die Bewegung der Belüfterkerze (15) und/oder der
Flüssigkeit (3) sowie das Herausheben und Eintauchen der Belüfterkerze (15) zeit- bzw. meßgesteuert erfolgt.

15. Vorrichtung zur Durchführung des Verfahrens nach Anspruch 1,
dadurch gekennzeichnet, daß das Belüfteraggregat (11) eine im
wesentlichen vertikale Hohlwelle (10) und von dieser radial abstrebende Belüfterkerzen (15) aufweist.

16. Vorrichtung nach Anspruch 15, dadurch gekennzeichnet, daß die Belüfterkerzen (15) an einer der Hohlwelle (10) zugeordneten Kastenwandung (21) angeordnet sind.

17. Vorrichtung nach einem der Ansprüche 15 und 16, dadurch gekennzeichnet, daß die Kastenwandung (21) Segmentteile (22) aufweist und polygonal ausgebildet ist.

18. Vorrichtung nach einem der Ansprüche 15 bis 17, dadurch gekennzeichnet, daß die Belüfterkerzen (15) in mindestens zwei Ebenen übereinander sternförmig angeordnet sind.

19. Vorrichtung nach einem der Ansprüche 15 bis 18, dadurch gekennzeichnet, daß das Belüfteraggregat (11) als Drehbelüfter ausgebildet ist und der Hohlwelle (10) ein Getriebemotor (9) mit vorzugsweise regelbarer Drehzahl zugeordnet ist.

20. Vorrichtung nach einem der Ansprüche 15 bis 19, dadurch gekennzeichnet, daß das Belüfteraggregat (11) an einer Hebe-/Senkvorrichtung (7) angeordnet ist.

21. Vorrichtung nach einem der Ansprüche 15 bis 20, dadurch gekennzeichnet, daß das Belüfteraggregat (11) an der Hebe-/Senkvorrichtung (7) um eine Achse (8) schwenkbar gelagert ist.

22. Vorrichtung nach einem der Ansprüche 15 bis 21, dadurch gekennzeichnet, daß dem Belüfteraggregat (11) auf Abstand ein vorzugsweise als Propeller ausgebildeter Strömungserzeuger (23) in der Flüssigkeit (3) vorgelagert ist.

- 16 -

23. Vorrichtung nach einem der Ansprüche 15 bis 22, dadurch gekennzeichnet, daß mindestens dem Belüfteraggregat (11) und/oder dem
Strömungserzeuger (23) eine Steuereinrichtung (28) zugeordnet
ist.

Fig.2

# Fig.3

0047921

| EINSCHLÄGIGE DOKUMENTE | | KLASSIFIKATION DER ANMELDUNG (Int Cl.3) |
|---|---|---|
| Kategorie | Kennzeichnung des Dokuments mit Angabe, soweit erforderlich, der maßgeblichen Teile | betrifft Anspruch |

| Kategorie | Kennzeichnung des Dokuments mit Angabe, soweit erforderlich, der maßgeblichen Teile | betrifft Anspruch | KLASSIFIKATION DER ANMELDUNG (Int Cl.3) |
|---|---|---|---|
| | <u>DE - A - 2 120 362</u> (UNION CARBIDE) <br> * Seite 5, Zeile 3 - Seite 6, Absatz 1; Seite 10, Zeile 11 - Seite 12, Absatz 1; Seite 39, letzter Absatz - Seite 41, Zeile 1; Seite 46, Zeilen 4-11; Seite 51, Anspruch 1; Seite 54, Anspruch 9 * <br><br> -- | 1-3,7 8,15 | C 02 F 3/20 |
| | <u>CH - A - 527 132</u> (M. SCHNYDER) <br> * Spalte 6, Zeilen 15-48; Spalte 7, Zeilen 32-41 * <br><br> -- | 1,4,8 15,18 | |
| | <u>DE - A - 1 584 890</u> (DANJES, M.) <br> * Seite 7, Zeile 3 - Seite 9, Absatz 1 * <br><br> -- | 1,4, 14 | RECHERCHIERTE SACHGEBIETE (Int. Cl.3) <br><br> C 02 F 3/20 |
| | <u>CH - A - 290 287</u> (KERAG) <br> * Seite 3, Ansprüche I,II * <br><br> -- | 9 | |
| | <u>DE - A - 2 842 651</u> (LANDUSTRIE SNEEK) <br> * Seite 3, Zeile 11 - Seite 4, Zeile 10 * <br><br> -- | 22 | |
| A | AIR DIFFUSION IN SEWAGE WORKS, Federation of sewage and industrial wastes associations, Champaign, 1952 Illinois, U.S.A. <br> * Seite 52, "General Precautions" * <br><br> -- ./. | | |

Der vorliegende Recherchenbericht wurde für alle Patentansprüche erstellt.

| Recherchenort | Abschlußdatum der Recherche | Prüfer |
|---|---|---|
| Den Haag | 04-12-1981 | TEPLY |

EPA form 1503.1  06.78

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der Maßgeblichen Teile | betrifft Anspruch |
|---|---|---|
| A | DE - A - 2 505 572 (FMC) | |
| A | US - A - 2 521 454 (CHICAGO PUMP) | |
| | ---- | |

**KLASSIFIKATION DER ANMELDUNG (Int Cl.³)**

**RECHERCHIERTE SACHGEBIETE (Int. Cl.³)**